(19) Europäisches Patentamt
European Patent Office
Office européen des brevets

(11) **EP 4 583 032 A1**

(12) **EUROPEAN PATENT APPLICATION**

(43) Date of publication:
**09.07.2025 Bulletin 2025/28**

(21) Application number: **25150415.5**

(22) Date of filing: **07.01.2025**

(51) International Patent Classification (IPC):
**G06Q 30/0601** *(2023.01)* **G06Q 50/00** *(2024.01)*
**G06Q 10/101** *(2023.01)*

(52) Cooperative Patent Classification (CPC):
**G06Q 30/0601; G06Q 30/0635; G06Q 50/01;**
G06Q 10/101

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.01.2024 IT 202400000183**

(71) Applicant: **Ateide S.r.l.**
**20123 Milano (MI) (IT)**

(72) Inventors:
• **DI PERNA, Debora**
**27040 MONTESCANO (PV) (IT)**

• **MOLINARO, Niccolò**
**42046 REGGIOLO (RE) (IT)**
• **MOLINARO, Tommaso**
**42046 REGGIOLO (RE) (IT)**
• **MOLINARO, Daniele**
**42046 REGGIOLO (RE) (IT)**
• **GABBA, Giampaolo**
**27040 MONTESCANO (PV) (IT)**

(74) Representative: **Ottazzo, Marco Francesco
Agostino et al
Giambrocono & C. S.p.A.
Via Rosolino Pilo, 19/b
20129 Milano (IT)**

(54) **METHOD AND SYSTEM FOR PURCHASING GOODS OR SERVICES, OR CUSTOMIZED PRODUCTS, IN A SHARED MODE**

(57) A method and a system for purchasing a single good or service, in a shared mode, by a plurality (N) of users, are described. The method is based on a 1 to $N^{th}$ relationship, wherein a plurality (N) of users aim to share a single good or service and wherein each of the users is willing to pay a share of the total cost of the single good or service. The method comprises the following steps: each supplier of a good or service sets (S1) the maximum number ($N_{max}$) of users who can use the good or service and the total cost ($C_{tot}$) of the good or service; each user or small group of users selects (S2) a good or service he or she wants to use; users who are potentially interested in using the same good or service are searched (S3) and grouped by affinity; the users who have been searched for are grouped (S4), in order to fully saturate the good or service in terms of maximum allowed number ($N_{max}$) of users; each grouped user purchases the selected good or service paying a minimum per capita amount, previously set by the supplier of the good or service, which is obtained by dividing the total cost ($C_{tot}$) of the good or service by the maximum number ($N_{max}$) of the users who can use the good or service; the maximum number ($N_{max}$) of users use (S6) the purchased good or service.

*Fig. 3*

EP 4 583 032 A1

**Description**

<u>Technical field</u>

The present invention relates to a method and system for purchasing goods or services, or customized products, in a shared mode. The method and system according to the present invention provide a solution in those fields where goods or services are sold which are characterized by the non-divisible nature of their price, and therefore can only be purchased in whole units, but which at the same time can be enjoyed in sharing with several, even unrelated people, that is to say with people who are not in contact with each other.

The method and system according to the invention therefore find their particular application in the entertainment, sports, leisure time and tourism fields. Furthermore, the method and system according to the invention find their application in the field of the control of the machines for the production of customized products.

<u>Background art</u>

With particular reference to the entertainment, sports and leisure time fields, different types of goods and services are known which can be purchased at a fixed price and, at the same time, can be shared with several, even unrelated people.

Nightclubs or other venues sell tables with a given number of seats; boats that can accommodate a certain number of passengers and houses that have a certain number of beds are rented and leased, respectively, for a fee and price that depend on the time of use; team sports pitches are rented based on the time of use, but the amounts are for the entire field; tents and gazebos of beach resorts, which can accommodate a certain number of people, are rented in full based on the time, and even particular gyms can be rented in full based on the time of use. Moreover, cars and commercial vehicles, which can accommodate a certain number of passengers, are rented in full based on the time of use.

Nowadays, the current practices of the fields listed above, and of other similar fields, provides for the goods or services to be sold in full. As far as the reservation and purchase of a table in a nightclub are concerned, the table can be currently booked and purchased by a group of users, the maximum number of which is set by the organizer. Furthermore, the table is typically booked and then purchased by contacting the promoter or the organizer of the event. More specifically, a group of users books the table in full and pays for it on site. In particular, the payment step usually involves the total amount of the table being divided by the total number of users in the group. It follows that, if the total number of users is lower than the maximum number set by the organizer, the per capita amount will be higher the lower the number of users is compared to the maximum number set.

The problem currently arising is, therefore, that it is difficult for the individual users, or a small group of users, to completely reach the maximum allowed number of people for saturating and being able to share the table. In particular, at present, individual users or small groups of users find it practically impossible to search for and find other users with whom to saturate the table before the start of an event. If an individual user or a small group of users wanted to find other users with whom to saturate the table, thus minimizing the per capita amount of the cost, they would have to make an advance reservation of the desired table and search for other people on site and convince them to participate; this would entail the high predicted risk they cannot manage to find the people for reasons of total number of members and personal budget required for participation. This entails a higher cost for the purchaser of the good or service or a loss of sales or margins for the supplier of the good or service.

Furthermore, and as far as the rental of an apartment for tourist or residential purposes, for example, is concerned, a user is currently expected to contact, directly or through booking platforms, the owner of the desired apartment. The rental price is set by the owner and the maximum number of guests for sharing the apartment corresponds to the maximum number of beds present in the apartment. It follows that, at present, the individual user should pay the entire rental cost or be part of a group of joint users, that is to say users who know each other, with whom to divide the total rental cost.

However, lacking people to share the apartment with, in order to minimize his or her share of the rental cost, an individual user should search through (online and offline) advertisements for people to saturate the beds in the apartment and to share the rental costs with, bringing the rental costs to the minimum per capita amount.

It is therefore evident that, in the current state of the art, people who are interested in sharing the same apartment but are not related to each other are searched for through to word of mouth and/or the use of advertisements on social networks (online) or through paper posters (offline). There is obviously a low probability of reaching saturation of the beds and with similar users. Furthermore, the owner of the apartment having a rental price higher than the budget standards of the individual user results in a potential risk of lost revenue from the rental fee and therefore a lowering of the rental fee to match supply with demand. A completely similar problem is encountered in the case of renting boats, commercial vehicles and airplanes, or umbrellas or tents in beach resorts.

Again, and as far as pitches or courts for team sports such as football, five-aside football or paddle pitches or courts are concerned, they are currently rented by means of telephone booking, via website or on site. The court or the pitch is rented at an hourly rate rental and the maximum number of participants is preset by the owner of the court or the pitch and by the sports regulations relating to the practice of the specific sport. Furthermore, the amount of the rental which is equally divided by the number of participants, is paid on site. In this case, too, it is difficult for an individual user or a small group of users to find other users to share the court with for practicing of a specific team sport.

For example, a soccer field is set for participation of a total number of sixteen participants, divided into two teams of eight participants each. Therefore, if an individual user or a small group composed, for example, of four/five users wanted to book a field to play soccer, they should first search for the users required to complete both teams, through advertisements on social or offline platforms.

It is therefore evident that, in the current state of the art, it is particularly difficult, if not impossible, to find people interested in the same field and the same playing time. It makes no sense, both from a sports practice point of view and from an economic point of view, for only four/five members belonging to one's own group to book a field intended to contain sixteen people, given that the hourly rate of the field would remain unchanged, but the total cost per individual customer would be four times higher than a subdivision with saturated sharing capacity. In this case, in the current state of the art, the field would not be booked by customers and would remain unsold for the owner, producing a loss of revenue.

Finally, as far as the industrial production of sports drinks or supplements is concerned, this is typically characterized by automated productions of standard products, which do not take account of the specific physical parameters of the person, the workout practiced, the energy requirement, the type of integration and the specific macronutrients (carbohydrates, proteins and fats). It follows that, at present, a user should independently increase or reduce the quantity of the product taken, to bring the dosage of macronutrients and the energy quantity acquired to the ideal requirement, generating great imprecision in the saturation of one's energy requirement, in the balance of macronutrients and in the aroma of the product.

As is clear from the above, the problem that currently arises is therefore that it is difficult for an individual user or a small group of users to reach the maximum allowed number of users for saturating and being able to share a good or service, such as for example a table in a nightclub, an apartment, a sports field or court or similar, with the consequence that the per capita amount for the purchase of the good or service is greater, which could discourage demand for the good or service.

This problem leads to the further difficulty for an individual user or a small group of users, of finding other users with whom to reach the maximum allowed number of users for saturating and being able to share a good or service, for example a table in a nightclub or an apartment.

In this case, the only solution currently possible is to book the table or apartment in advance and then search for other users and convince them to share the table or apartment, with the real risk they cannot not finding other users. This discourages demand for the good or service, thus affecting the sale of the good or service. A good or service remains currently unsold due to lack of demand or, alternatively, depreciated with consequent loss of profit for the supplier.

Again, as far as the purchase of customized products, specifically drinks or supplements for athletes is concerned, it is impossible to create a drink or supplement tailored for a specific user, namely a drink or supplement that takes into account the specific physical parameters of the user, the workout performed, the energy requirement, the type of integration and the specific macronutrients.

The applicant has therefore found that if a good or service can only be purchased in its entirety, but it can at the same time be shared and purchased by a plurality of users, reaching the maximum number of admissible users, it is possible to minimize the unit cost borne by the individual user and, at the same time, minimize the risk for the supplier of the good or service to have unsold goods. In this case, in fact, the good or service would be used by a number of users equal to its maximum capacity, which, in this condition, would be saturated.

The main object of the present invention is, therefore, to provide a method and a system for purchasing goods or services, or customized products, in a shared mode, which is capable of overcoming, or at least minimizing, the drawbacks highlighted above with reference to the methods of booking and purchasing goods or services according to the prior art.

More specifically, the main object of the present invention is to provide a method and a system for purchasing goods or services, or customized products, in a shared mode, which are configured in such a way as to reach the maximum number of users for saturating and being able to share the good or service, thus allowing the individual customer to bear the lowest possible cost for his or her purchase share.

Another object of the present invention is to provide a method and a system for purchasing goods or services, or customized products, in a shared mode, which are configured in such a way as to minimize the risk for the supplier of the good or service to have unsold goods.

Yet another object of the present invention is to provide a method and a system for purchasing customized products and for which one or more factors to be optimized are known (for example the price requested), but where the combination of the elements or ingredients of the product necessary to reach the customization requested by the customer on features of the product is unknown.

These and other objects, which will be more evident in the following description, are reached by a method and a system according to the attached independent claims. Further features of the invention are described in the dependent claims.

In a first aspect, the invention thus relates to a method for allowing a plurality of users to purchase goods or services, or customized products, in a shared mode. The method is based on a 1 to $N^{th}$ relationship, wherein a plurality of N users aim to share a single good or service, or a single unit of a product, and wherein each of the N users is willing to pay a portion of the total cost of the single good or service. The method is implemented by a system comprising at least one supplier device, at least one user device, at least one access control device and a remote server. The supplier device, the user device and the access control device are in communication with the remote server.

The method comprises the following steps: each supplier of a good or service sets on the remote server and through the supplier device the maximum number of the users who can use the single good or service and the total cost of the single good or service; each user or small group of users selects on the remote server and through the user device a good or service that each user or small group of users wishes to use; the remote server searches for users who are potentially interested in using the same good or service and group them by affinity; the remote server groups the users who have been searched for and grouped so as to completely saturate the good or service in terms of the maximum allowed number of users; each grouped user purchases the selected good or service through the user device paying a minimum per capita amount, obtained by dividing the total cost of the good or service by the maximum number of users who can use the good or service, previously set by the supplier of the good or service; and the aforementioned maximum number of users use the purchased good or service.

In a second aspect, the invention relates to a system for purchasing goods or services in a shared mode configured to implement the method as above defined. The system comprises at least one supplier device, at least one user device, at least one access control device and a remote server. Each supplier device is in communication with the remote server to allow a supplier to set a maximum number of users who can use the good or service and the total cost of the good or service. Each user device is in communication with the remote server to allow a user or small group of users to select a good or service he or she wishes to use. The remote server is configured to: search for users who are potentially interested in using the same good or service and grouping them by affinity; group the users who have been searched for and grouped, so as to completely saturate the good or service in terms of the maximum allowed number of users; and allow each grouped user to use of the selected good or service, after the payment of a minimum per capita amount previously set by the supplier of the good or service, which is obtained by dividing the total cost of the good or service by the maximum number of users who can use the good or service.

The method and system according to the invention are, therefore, configured to allow a user to find other users or groups of users, who have the same interest in a given good or service, with whom they can share the reservation and purchase, so as to reach the maximum allowed number of users for saturating and being able to share the good or service. This advantageously allows the individual user to bear the lowest possible cost for his or her amount for purchasing the good or service and the supplier of the good or service to promote the sale of the good or service to users who are not related to each other, but who share the interest in the same good or service.

Furthermore, the method and system according to the invention are configured to control the machines for the production of customized products, in order to promote the creation of customized products, for example drinks or supplements for athletes, appropriately dosed for a specific user.

Document US 2021/241294 A1 discloses a method for group buying of goods or services with a pricing structure depending on the good or pledge to purchase. This method is based on a 1-to-1 relationship, wherein an individual buyer pledges to purchase a single quantity of a predefined product, with a price that depends on the number of buyers and the discount level reached.

Conversely, the method and system according to the invention are based on a 1 to $N^{th}$ relationship, wherein a plurality of N users share a single good or service, or a single unit of a product, and wherein each of the N users pays a portion of the total cost of the single good or service. Furthermore, the good or service, or the product, may not be preset, but rather dynamically customized based on the user's input, such as customized products that are dispensed by vending machines.

In addition, the method and system according to the invention relate to products or services that cannot be sold in divisible portions. For example, in a nightclub, a plurality of users may share the cost of a single table, which is sold as a whole and not as individual seats. Each user contributes to the total cost of the single table, but no portion of the table is sold individually.

In document US 2021/241294 A1 the sale of individual products to individual users is instead envisaged, optimising the price by aggregating the pledges to purchase. This type of sale differs from the one of the method according to the invention, wherein a plurality of users share a single non-divisible good or service, both in terms of the methods of implementation and the object it aims to achieve.

The object of the method disclosed in document US 2021/241294 A1 is in fact to optimise the price of the quantities of individual products that are sold to each user. Conversely, the method and system according to the invention guarantee the shared use of a single good or service that cannot be sold in portions (such as a football pitch or a table in a nightclub). The object of this method and system is, therefore, to optimise the grouping of users based on affinity, to maximise the usability of the good or service and minimise the costs.

The method and system according to the invention can also be applied to goods or services that can only be rented or booked in their entirety, such as a soccer field. In this scenario, the system forms groups based on affinity (for example, the skill level of the players, the role on the field or preferences) to create two teams, optimizing both the experience and the cost per participant. The entire soccer field is rented and the system ensures that the cost is minimized for each player, by occupying all the positions requested based on affinity, without dividing the service into smaller and saleable portions.

As used herein below and in the accompanying claims, the terms "good" and "service" will refer to any good or service that can be purchased at a fixed price, but such that it can be shared among multiple people, even if they are not related to each other.

As used herein below and in the accompanying claims, the wording "small user group" will refer to a user group containing a number of members lower than the maximum number of users required to saturate a good or service.

Brief description of the drawings

Further features and advantages of the present invention will become apparent from the following exemplifying and hence non-limiting detailed description of preferred embodiments of a method and system for purchasing goods or services, or customized products, in a shared mode, given below with reference to the attached drawings. In the drawings:

Figure 1 is a schematic view showing a system for purchasing goods or services in a shared mode according to the present invention;
Figure 2 is a schematic view showing a system for purchasing customized products according to the present invention;
Figure 3 is a block diagram illustrating the steps of a method for purchasing goods or services in a shared mode according to the present invention;
Figure 4 is a block diagram illustrating additional steps of the method for purchasing goods or services in a shared mode according to the present invention; and
Figure 5 is a block diagram illustrating the steps of a method for purchasing customized products according to the present invention.

Detailed description of the invention

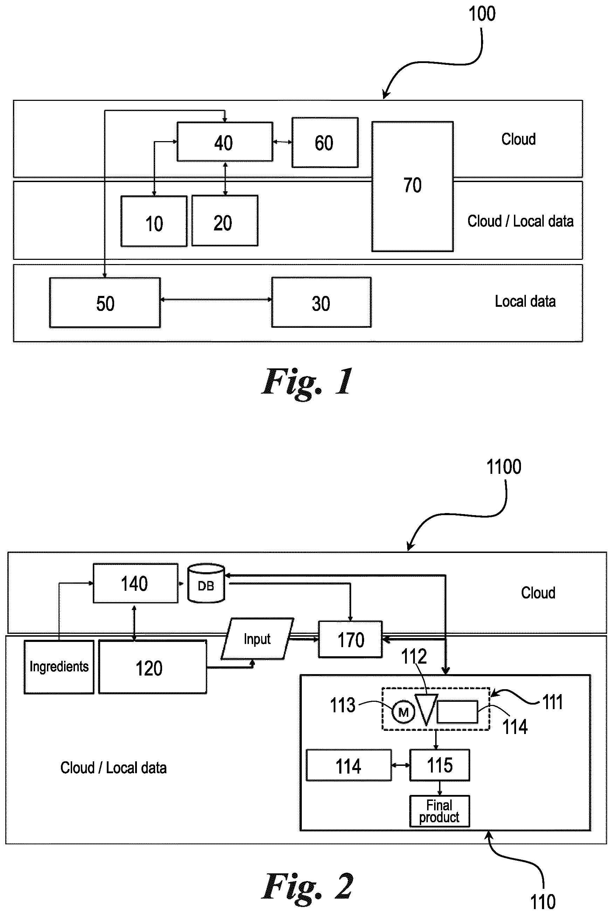

With reference to figure 1, a system for purchasing goods or services in a shared mode according to a preferred embodiment of the present invention is shown.

The system, which is indicated as a whole with reference number 100, comprises one or more supplier devices 10, one or more user devices 20, one or more access control devices 30 and a remote server 40. Preferably, the remote server 40 is a back-end system hosted on a cloud infrastructure.

The supplier devices 10 and the user devices 20 can be any device, such as a smartphone, a smartwatch, a tablet, a PC or other similar devices, configured to be connected to the Internet, and thereby to the remote server 40, using any known system or protocol.

The access control devices 30 can be devices for detecting and identifying people and/or tickets, such as scanners, gate or turnstile opening devices, door opening devices, safety deposit box opening devices, electronic keys for changing rooms, lockers, IoT (Internet of Things) systems for heating, lighting and air conditioning a sports facility and similar devices.

In particular, the supplier devices 10 are equipped with a software or an application, through which each supplier of a good or service can set on the remote server 40 a series of parameters relating to the good or service that is desired to be provided.

The user devices 20, in turn, are also equipped with a software or an application through which each user of a good or service can access the remote server 40 to select a good or service that he or she wishes to use. In addition, a user can access through his or her user device 20 the remote server 40 to create a group of users interested in the selected good or service, for example by providing the name of each user of the group and the number of members of the group. The access control devices 30 are also connected to the remote server 40.

As will become clearer later in this description, the remote server 40 runs a software 70, which is configured to form groups of users in order to saturate the capacity of a good or service, minimizing the per capita cost for each user of the formed group of users.

More specifically, and as will be described in detail below, depending on the good or service selected by a user or a small group of users, the software 70 is configured to find, for example by accessing one or more social network platforms 60, such as Facebook, Instagram, LinkedIn and the like, other users or small groups of users who have the same interest in a given good or service, with whom they can share the reservation and purchase, thus reaching the maximum allowed number of users for saturating and being able to share the good or service and therefore allowing the individual user to bear the lowest possible cost for his or her purchase amount.

Preferably, the system 100 also comprises devices 50 for issuing an entry ticket, for example a cash register, in communication with the remote server 40, which are configured to issue an entry ticket, upon payment by each user of his or her amount for purchasing the good or service. The issued ticket will be then provided to the access control devices 30 to allow each user to use the good or service.

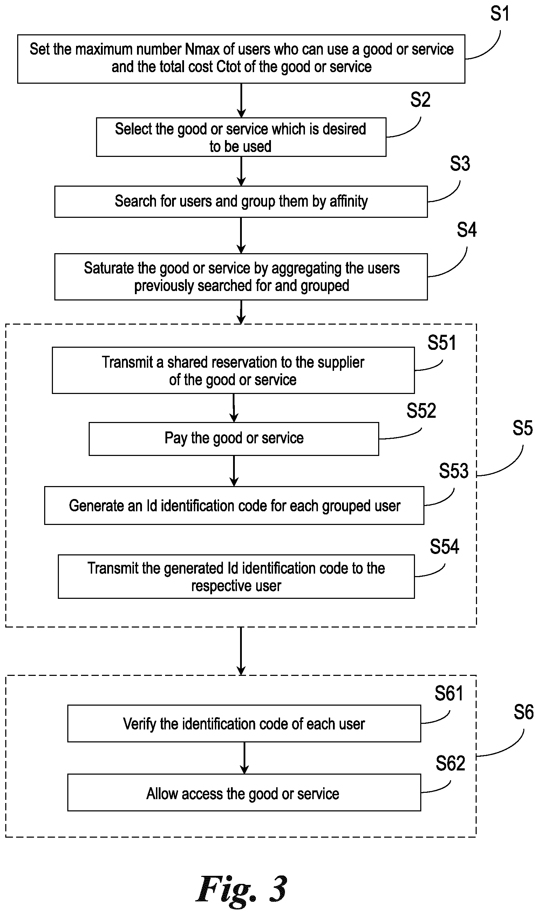

With reference to figure 3, the steps of a method for purchasing goods or services in a shared mode according to the present invention are shown, the method being implemented by using the system 100 for purchasing goods and services in a shared mode described above and illustrated in figure 1.

In the following, reference will be made to the purchase of a table in a nightclub, but it is understood that what has been described applies in a completely analogous way to the use of any other good or service, for example for the rental of an apartment for tourist or residential purposes, the rental of a boat, a commercial vehicle, an airplane, a beach umbrella or a tent in a beach resort, or the reservation of facilities for team sports and fitness.

The method is based on a 1 to $N^{th}$ relationship, wherein a plurality of N users aim to share a single good or service, or a single unit of a product, and wherein each of the N users is willing to pay a share of the total cost of the single good or service. The method involves a preliminary step S1 for setting the parameters of the good or service. During this step, a supplier of a good or service, in this case the manager of a nightclub, using its own supplier device 10, for example a smartphone, sets on the remote server 40 a series of parameters associated with a good or service provided, in this case the tables for a given event. The parameters are, for each table, the maximum number $N_{max}$ of people who can sit at the table and the total cost of the table $C_{tot}$.

In the case of renting an apartment for tourism or residential purposes, renting a boat, a commercial vehicle, an airplane, a beach umbrella or a tent in a beach resort, or booking facilities for team sports and fitness, the set parameters are the maximum number of people who can rent the apartment, rent the boat, commercial vehicle, airplane, beach umbrella or book the sports facility, as well as the total cost of the apartment, boat, commercial vehicle, airplane, beach umbrella or sports facility.

Now, it is assumed that an individual user or a small group of users, that is to say a group comprising a number of users less than the maximum number $N_{max}$ of people who can sit at the table, wishes to purchase the table for the event.

The method proceeds from the step S1 to a good or service selection step S2. During this step, each user selects on the remote server 40, using his or her own user device 20, for example a smartphone, a good or service that he or she wants to use, in this example a table for an event. In particular, in the case of a small group of users, an individual user of the group, using his or her own user device 20, can enter the number $N_m$ of members of the group and the names of each member.

From step S2, the method proceeds to a user search and grouping step S3. During this step, the software 70 running on the remote server 40 searches, for example by accessing social network platforms, individuals who are potentially interested in the table, it groups them by affinity and location, and organizes all requests from unrelated groups for a specific table to be shared. More specifically, such search and grouping step S3 uses a prioritization mechanism based on user-configurable parameters, constraints and objectives and uses sorting, optimized combination and clustering algorithms.

From the step S3, the method proceeds to a good or service saturation step S4. During this step, the software 70 running on the remote server 40 groups the individual users or small groups of users, so as to completely saturate the good or service, in this specific case the capacity of the tables in terms of the maximum allowed number $N_{max}$ of participants, previously set by the manager of the nightclub.

More specifically, during such saturation step S4, the software 70 running on the remote server 40 allocates the individual users or small groups of users, so as to obtain the greatest number of completely saturated tables. The individual users or small groups of users are allocated by using a greedy assignment algorithm, which is based on the difference between the maximum allowed number $N_{max}$ of participants and the number $N_m$ of members of each group. This heuristic approach tries to allocate groups to the tables so as to minimize, for each table, the difference between the maximum number $N_{max}$ of participants allowed and the number $N_m$ of members of each group. Mathematically, this translates into formulating a Mixed-Integer Linear Programming (MILP) problem or a combinatorial optimization problem.

From the step S4, the method proceeds to a good or service purchasing step S5. During such step, each user pays through his or her user device 20 the minimum per capita amount foreseen, which is obtained by dividing the total cost Ctot of the good or service, in this case the table assigned to him or her, by the maximum number $N_{max}$ of users who can use the good or service, previously set by the supplier of the good or service. Following payment, an access ticket to the good or service is issued.

Preferably, the good or service purchasing step S5 includes the following sequential steps: a step S51 wherein the remote server 40 in communication with each supplier device 10 transmits a shared reservation to the supplier of the good or service; a step S52 wherein each user grouped in the step S3 pays the good or service through the respective user device 20; a step S53 wherein the software 70 running on the remote server 40 generates an Id identification code, for example a QR code, a token or similar identifiers; and a step S54 wherein the remote server 40 in communication with each user device 20 transmits the Id identification code generated to each user grouped in the step S3.

In the case in question, the shared reservation is transmitted by the remote server 40 to the nightclub ticket office, with the consequent issuing of access tickets for the individual users who have been grouped, at the time of purchase of the good or service.

The step S5 is followed by a step S6 wherein the maximum number $N_{max}$ of users use of the purchased good or service.

In the case where the method provides for the generation of an Id identification code, at the time of use of the good or service, the step S6 provides for a step S61 wherein the supplier of the good or service checks the Id identification code of each user, followed by a step S62 of authorization of each user to access the good or service, following a positive outcome of the check.

In particular, the verification step S61 consists of performing checks, via the supplier device 10, on a supplier database installed on the remote server 40. Furthermore, in this step S62 of authorization of access to the good or service, the remote server 40 controls the access control devices 30 of the system 100, owned by the supplier of the good or service. In the case in question, the access control devices 30 consist, for example, of scanners, gate opening systems or turnstiles, and/or lockers.

Conversely, in the case of the rental of an apartment for tourist or residential purposes, the access control devices 30 consist, for example, of electronic safety deposit boxes or electronic locks. It follows that, following verification of the Id identification codes, the method allows access to the aforementioned box where the keys for access to the shared apartment, for example, or the unlocking of the access door in the case of electronic locks, are placed.

Finally, in the case of access to sports fields or courts or gyms, the access control devices 30 consist, for example, of electronic keys for changing rooms, personal lockers and/or equipment lockers.

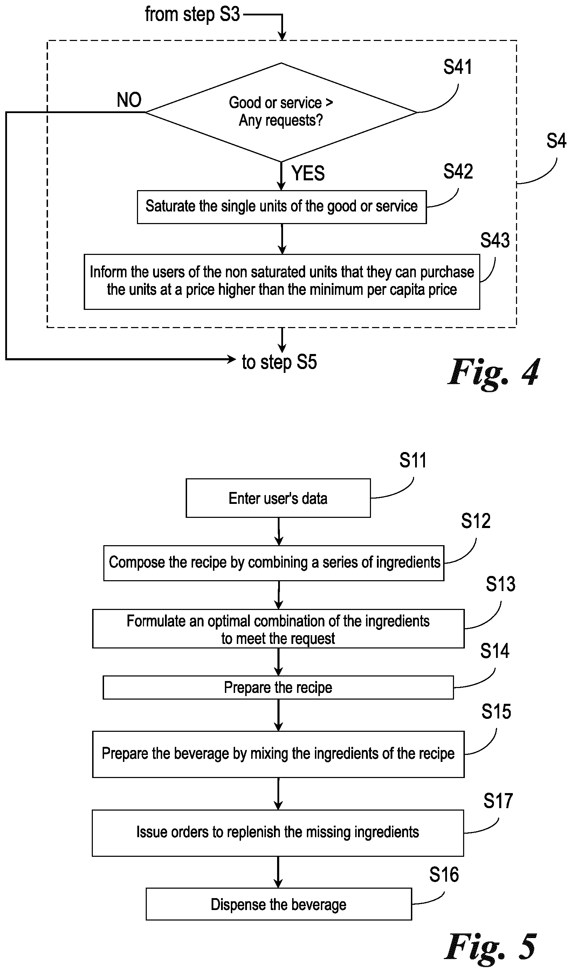

As shown in figure 4, in the case where the good is made up of multiple units, for example multiple tables in a nightclub, the saturation step S4 includes a control step S41, during which the software 70 running on the remote server 40, checks whether the good or service to be saturated, in this specific case the number of tables to be completed, is greater than the number of requests received from individual users or small groups of unrelated users. If so (step S41, YES), the method proceeds to a step S42, during which, instead of assigning groups to each table, thus generating tables that are not completely saturated, the software 70 proceeds to form completely saturated tables, followed by a step S43 wherein the users of the partially full tables are notified, via the user devices 20 connected to the remote server 40, that they can purchase the table at unit prices higher than the minimum per capita prices, calculated by dividing the total cost Ctot of the table, previously set by the nightclub manager, by the number of people who will occupy it. Otherwise (step S41, NO), the method proceeds to the good or service purchase step S5.

The result of this process guarantees the formation of a table that in the current state of the art would be impossible to achieve, thus generating greater revenues for the nightclub, expanding demand towards individual customers and micro-companies, without applying depreciation and selling to groups of customers who are not related to each other, but who share an interest in a particular table and who will only find themselves joined at the event sharing the table product.

As far as the method described above is concerned, it is assumed, for example, that a table is sold by the manager of a nightclub at a total cost Ctot of € 500 and that the maximum number $N_{max}$ of people who can sit at the table is ten.

Be it also assumed that a group of people, hereinafter referred to as group 1, comprises three members, each of whom is willing to spend a maximum of € 50 to purchase a table. Under these conditions, group 1 cannot book the table of interest, since, under the current occupancy conditions, the per capita expenditure would be € 500 / 3 members = € 166.6, which is significantly higher than the amount the individual members of the group are willing to spend. It follows that the nightclub's offer could not meet the needs of group 1, so, in the absence of other groups, the table could remain unsold or a high discount would be necessary, resulting in a loss of profitability for the nightclub.

Based on the number of requests received for a table having a certain price, set in advance by the organizer of an event, the method according to the present invention, described above, provides for a saturated tables formation step, during which the users or small groups of users who are most similar to each other are grouped, finding the right combinations for the complete saturation of the single table.

The method, therefore, advantageously allows a table to be formed before the start of an event, thus generating greater revenues for the venue, expanding the demand towards single people or small groups of people, without applying depreciation and selling to single people or groups of people who are not related to each other, but who share the interest in a certain table and who will find themselves joined only during the event, sharing the table asset.

By applying the method according to the present invention, before the event starts, group 1 can be joined to other groups of users or to individual users, who are not related to each other, until reaching the maximum number of ten. In this way, each person can pay the minimum amount of € 50.

The method described so far can therefore be implemented by the respective system to allow a plurality of users to:

- book and purchase entrance tickets;
- book and purchase shared goods, services and/or products, such as shared tables, which are sold as units (that is the entire table and not the individual seats), and in general any other service that can only be sold in bulk but which can be shared among numerous users;
- obtain benefits for controlled access and priority services, or to skip queues for entry, cloakroom, parking and other services;
- receive in-app promotions, loyalty programs, participation in competitions and online games;
- participate in a social community within the app to allow participants in a given event to interact and form groups by affinity (for example common interests, same age group, etc.);
- share the good or service with a group of other users who have affinity with each other.

With reference to figure 2, a system for purchasing a good or service according to the present invention is now described, wherein the purchased good consists of a customized product, which is dispensed by a customized product dispensing machine.

The system, which is indicated as a whole with reference number 1100, comprises one or more user devices 120, one or more machines 110 for dispensing customized products and a remote server 140. Preferably, the remote server 140 is a back-end system hosted on a cloud infrastructure. The user devices 120 and the machines 110 for dispensing customized products are configured to be connected to the Internet, and thereby to the remote server 140, using any known system or protocol.

The user devices 120 may be a smartphone, a smartwatch, a tablet, a PC or other similar devices. In particular, the user devices 120 are equipped with a software or an application, through which each user can set a series of parameters on the remote server 140.

In the illustrated embodiment, the system 1100 provides a customized product dispensing machine, consisting of an automatic dispenser 110 for dispensing sports or energy drinks, in which case the parameters set by the user are the price of the beverage and target parameters, such as their personal data, including weight, height, body mass index or BMI, fat and lean mass, intolerances, their workout data and the desired price of the drink.

Preferably, the user can enter additional parameters related to their energy needs and preferences in terms of macronutrients. For example, a user can set a sports drink with a prevalence of protein content, which meets an energy requirement of one thousand kcal.

In particular, the vending machine 110 comprises a dosing unit 111, which includes a plurality of containers 111 (only one visible in figure 2), each containing a respective ingredient, in powder or liquid form, to be mixed, a motor 112 and a weight sensor 113.

The vending machine 110 also comprises a mixer 114, in which the products dosed in the dosing unit 111 are inserted and mixed, and a plurality of containers 115, each suitable for containing the personalized sports or energy drink dispensed by the vending machine 1100.

As will become clearer in the following description, the remote server 140 runs a software 170, which is configured to interact with the user devices 120 and the dosing unit 111 of the vending machine 1100, so that the latter dispenses a beverage, which meets the parameters previously set by the user.

Furthermore, if there were multiple requests at the same time in terms of the number of beverages to be produced and the quantity of the ingredients present in the machine did not allow all the products to be entirely completed, the software 170 running on the remote server 140 would work efficiently by combining the ingredients to ensure, as a priority, the completion of the greatest possible number of products with the requested specifications. If this were not possible, the software 170 would propose the combination of the ingredients that comes closest to the user's requests, asking for confirmation for production.

With reference to figure 5, the steps of a method for purchasing a customized product, implemented using the system 1100 for purchasing a customized product described above and illustrated in figure 2 are shown.

In the following, a customized product will be referred to as a sports or energy drink, but it is understood that what is described applies in a completely analogous way to the purchase of any other customized product, which involves the combination of two or more components and/or ingredients.

The method starts with a data entry step S11, during which a user, via his or her own user device 120, for example a smartphone, enters a series of data, such as his or her personal data (weight, height, body mass index or BMI, fat and lean mass, intolerances), the workout data, the need for integration, the desired target price and the aroma of the beverage he or she wants to enjoy.

From the step S11, the method proceeds to a recipe composition step S12, during which the user composes the product recipe by entering the number of desired kcal and quoting whether he or she intends to have a majority of one macronutrient over another. Alternatively, the recipe is automatically formulated by the software 170 running on the remote server 140, based on the data previously entered by the user.

From the step S11, the method proceeds to a recipe composition step S12, during which the user composes the product recipe by entering the number of desired kcal and whether he/she intends to have a majority of one macronutrient over another. Alternatively, the recipe is automatically formulated by the software 170 running on the remote server 140, based on the data previously entered by the user.

From the step S12, the method proceeds to a step S13, during which the software 170 processes the user's requests and formulates the optimal combination of ingredients and macronutrients to meet the request, considering the availability of the ingredients with the aim of producing the greatest number of complete products.

From the step S13, the method proceeds to a recipe preparation step S14. During this step, the remote server 140 controls the activation of the automatic dispenser 110, so as to prepare the recipe with the quantities of the necessary ingredients. Specifically, the remote server 140 controls the dosing unit 111, which, through interaction with the containers 112 in which the ingredients (liquids, powders and solids) are contained, the motors 113 and the weight sensors 114, prepares the recipe.

From step S14, the method proceeds to a beverage preparation step S15. During this step, the remote server 140 controls and activates the mixer, stirrer, extrusion and heating for mixing the ingredients of the recipe.

The method then ends with a personalized beverage dispensing step S16.

Preferably, between the ingredients mixing step S15 and the beverage dispensing step S16, the method includes a step S17 for issuing orders to replenish the missing ingredients, adjusting the container stock based on consumption trends and their predictability.

The mathematical model for the method implemented by the system shown in figure 2 can be expressed as:

$$P = f(X_1, X_2, \ldots, X_n) = \sum_{i=1}^{k} c_i \cdot I_i(X_1, X_2, \ldots, X_n)$$

where:

- *P* is the final product;
- *X1, X2, ... X$_n$* are the input variables (for example weight, height, body mass index or BMI, fat and lean mass, intolerances, etc.);
- $c_i$ is the quantity of the ingredient i; and
- *I$_i$(X1, X2, ... X$_n$)* is a function that calculates the exact quantity of the ingredient i based on the input variables.

Furthermore, the number of the possible combinations of ingredients is calculated using combinatorics. Once a number *k* of ingredients and a number *n* of input variables that affect the quantities of these ingredients are defined, the total number of combinations can be determined using the *"stars and bars theorem"*:

$$total\ number\ of\ combinations = \frac{(n+k-1)!}{k!(n-1)!}$$

This formula calculates the number of ways the ingredients can be combined to create a final product based on each user's unique inputs. This dynamic, user-specific method is not disclosed in document US 2021/241294 A1, which instead discloses a static group buying model where the product is static and only the pricing structure varies.

In general, dividing the total cost among all users of a single good or service is not a simple non-technical calculation, but is a key aspect of the purchasing method. The real innovation consists in the technical implementation of this concept in a networked system that dynamically adapts to inputs and processes changes in user participation in real time. Furthermore, the good or service, or the product, is not predefined, but is customized based on user inputs and the price reflects this customization. Furthermore, in cases such as vending machines, where customization based on user inputs creates unique products, the division is not trivial: it is a key component of the system's dynamic pricing model. The number of possible combinations of the ingredients demonstrates the system's ability to create a wide range of unique products.

The description given clearly shows the features of the method and system for purchasing goods or services, or customized products, in a shared mode, according to the present invention, as well as the related advantages. The method and system according to the present invention allow goods or services to be purchased in a shared and customized mode, unlike what is illustrated, for example, in document US 2021/241294 A1. The examples of the nightclub, the soccer field, the vending machine and the combinatorial approach to the dynamic creation of products illustrate the novelty of the invention, underlining the ability to generate unique products based on the user's input. These features are not present in the group buying systems such as those illustrated in document US 2021/241294 A1, where the products are predefined and the price is the only variable.

Document US 2021/241294 A1 in fact discloses a process wherein the users pledge to buy a product, expecting to be able to purchase it with a discount when a certain number of purchase pledges has been reached (see paragraphs [0049]-[0050] of US 2021/241294 A1). While document US 2021/241294 A1 provides for the pledge to purchase predefined products with a dynamic pricing structure, in the method according to the present invention users select or share a single good or service or a single product that is not preset. The product, for example, is the result of a combination of inputs from the users themselves. This is a substantial difference, because it introduces a dynamic aspect both in the product and in the purchasing experience.

The method according to the present invention groups the users of the single good or service based on personal characteristics such as the age, location or interests to enable the purchase or shared use of a good or service that is not sold in parts. The example of the vending machine makes this concept clear: the user directly enters his or her variables (for example. weight, height, body mass index or BMI, fat and lean mass, intolerances, etc.). Users do not need to make purchase pledges to obtain discounts.

Document US 2021/241294 A1 includes features for social media integration and tracking user participation to estimate the demand and influence prices (see paragraphs [0035]-[0036] and [0040] of US 2021/241294 A1). It is also mentioned that the buyers are grouped by price tiers (see paragraph [0070] of US 2021/241294 A1).

In the method according to the present invention, users are grouped by affinity, such as user attributes (age, interests, location), not only by price tiers. In the context of services such as nightclub events or group dinners, users are grouped by affinity to form optimized social experiences. For example, in a nightclub, the system according to the present invention could group people at tables based on common characteristics, ensuring both social harmony and price optimization. The affinity refers to the customers/users, not to the good or service or product. This is a completely different and more sophisticated approach than product affinity and price level grouping according to document US 2021/241294 A1. In the vending machine example, the product is customized based on the user input and each quantity of the ingredients in the recipe is tailored to the user's needs.

Document US 2021/241294 A1 describes a system wherein buyers are grouped together until the required number of purchase pledges to achieve a given price level is met (see paragraph [0070] of US 2021/241294 A1).

In the method of the present invention, the grouping of users of the good or service refers to the sharing of a good or service that cannot be sold in part only. Each user contributes a portion of the total cost of the good or service, rather than pledge to purchase a product at a fixed price. This "sharing mode" is distinct from US 2021/241294 A1, where the product is predefined and only the price fluctuates based on the number of buyers.

The method and system of the present invention, thus conceived, are however susceptible of numerous modifications and variations, all of which falling within the scope of the same inventive concept; furthermore, all the details can be replaced by technically equivalent elements.

**Claims**

1. A method for purchasing goods or services, or customized products, in a shared mode, by a plurality (N) of users, the method being based on a 1 to $N^{th}$ relationship, wherein a plurality (N) of users aim to share a single good or service, or a single unit of a product, and wherein each user of said plurality (N) of users is willing to pay a share of the total cost of the single good or service, wherein the method is implemented by a system (100) comprising at least one supplier device (10), at least one user device (20), at least one access control device (30) and a remote server (40), wherein said at least one supplier device (10), said at least one user device (20) and said at least one access control device (30) are in communication with said remote server (40), the method comprising the following steps:

    - each supplier of a good or service sets (S1) on said remote server (40) and through said at least one supplier device (10) the maximum number ($N_{max}$) of said plurality (N) of users who can use the single good or service and the total cost ($C_{tot}$) of said single good or service;
    - each user or small group of users selects (S2) on said remote server (40) and through said at least one supplier device (10) a good or service he or she wants to use;
    - said remote server (40) searches (S3) for users who are potentially interested in using the same good or service, and group them by affinity;
    - said remote server (40) groups (S4) the users who have been searched for and grouped, in order to fully saturate the good or service in terms of maximum allowed number ($N_{max}$) of users;
    - each grouped user purchases (S5) the selected good or service through said at least one user device (20), paying a minimum per capita amount, previously set by the supplier of the good or service, which is obtained by dividing the total cost ($C_{tot}$) of the good or service by the maximum number ($N_{max}$) of the users who can use the good or service; and
- said maximum number ($N_{max}$) of users use (S6) the purchased good or service.

2. The method according to claim 1, wherein said step (S5) of purchasing the selected good or service comprises the following steps:

- said remote server (40), in communication with said at least one supplier device (10), transmits (S51) a shared reservation to the supplier of the good or service;
- each grouped user pays (S52) the good or service through said at least one user device (20) in communication with said remote server (40);
- said remote server (40) generates (S53) an identification code (Id); and
- said remote server (40), in communication with said at least one user device (20), transmits (S54) the generated identification code (Id) to each grouped user.

3. The method according to claim 1 or 2, wherein said good or service using step (S6) comprises the following steps:

- the supplier of the good or service verifies (S61) the identification code (Id) of each user, through said at least one supplier device (10), on the supplier's database installed on said remote server (40); and
- each user is authorized (S62) to access the good or service, after successful verification, wherein in said authorization step (S62) the remote server (40) controls said at least one access control device (30) owned by the supplier of the good or service.

4. The method according to any of the preceding claims, wherein the users searching step (S3) is performed by accessing social network platforms and grouping users by affinity and location by using a prioritization mechanism based on parameters, constraints and objectives which can be configured by the users and sorting optimized combination and clustering algorithms.

5. The method according to any of the preceding claims, wherein said good or service saturation step (S4) is performed by using a greedy assignment algorithm, which is based on the difference between the maximum number ($N_{max}$) of the users who can use the good or service and the number of the grouped users.

6. The method according to any of the preceding claims, wherein, in the event that a good or service comprises multiple units, the step of aggregating (S4) the searched and grouped users, in order to completely saturate the good or service, comprises the following steps:

- checking (S41), through said remote server (40), if the good or service to be saturated is greater than the number of requests received from individual users or small groups of users; and
if that is the case (S41, SI),
- assigning (S42), through said remote server (40), groups of users to each single good or service, thus generating units of the good or service that are not completely saturated; and
- informing (S43) the users of the partially complete units, through said at least one remote server (40), of the possibility of purchasing the units of the good or service at unit prices higher than the minimum per capita prices; otherwise (S41, NO),
- proceeding to the step (S5) of purchasing the selected good or service.

7. A system (100) for purchasing goods or services, or customized products, in a shared mode, configured to implement the method according to any of the preceding claims, wherein the system comprises at least one supplier device (10), at least one user device (20), at least one access control device (30) and one remote server (40), wherein said at least one supplier device (10) is in communication with said remote server (40) to set (S1) or allow a supplier to set a maximum number ($N_{max}$) of users who can use the good or service and the total cost (Ctot) of the good or service, wherein said at least one user device (20) is in communication with said remote server (40) to allow a user or a small group of users to select a good or service he or she wants to use, and wherein said remote server (40) is configured for:

- searching (S3) users potentially interested in using the same good or service, and grouping them by affinity;
- aggregating the searched and grouped users, in order to completely saturate the good or service in terms of the maximum allowed number ($N_{max}$) of the users;
- allowing each aggregated user to use the selected good or service, after the payment of a minimum per capita amount, previously set by the supplier of the good or service, which is obtained by dividing the total cost (Ctot) of the good or service by the maximum number ($N_{max}$) of the users who can use the good or service.

8.  The system (100) according to claim 7, wherein said at least one control device (30) for access control is a people and/or tickets detecting and identifying device, a scanner, a gate or turnstiles opening device, a door opening device, a safe box opening device, an electronic key for changing rooms, a locker, an IoT (Internet of Things) system for heating, lighting and air conditioning a sports facility.

9.  The system (100) according to claim 7 or 8, further comprising devices (50) for issuing an entry ticket, in communication with the remote server (40), which are configured for issuing an entry ticket, against payment by each user of their purchase amount for purchasing the good or service, wherein the issued ticket will then be given to the at least one access control device (30), to allow each user to use the good or service.

10. The system (100) according to any claims 7 to 9, wherein said at least one supplier device (10) and said at least one user device (20) are a smartphone, a smartwatch, a tablet, a PC, which are configured to be connected to the Internet using any known system or protocol.

100

Cloud

Cloud / Local data

Local data

**Fig. 1**

1100

Cloud

Cloud / Local data

**Fig. 2**

*Fig. 3*

from step S3

NO ← Good or service > Any requests? S41

YES

Saturate the single units of the good or service S42

Inform the users of the non saturated units that they can purchase the units at a price higher than the minimum per capita price S43

S4

to step S5

*Fig. 4*

Enter user's data S11

Compose the recipe by combining a series of ingredients S12

Formulate an optimal combination of the ingredients to meet the request S13

Prepare the recipe S14

Prepare the beverage by mixing the ingredients of the recipe S15

Issue orders to replenish the missing ingredients S17

Dispense the beverage S16

*Fig. 5*

Europäisches
Patentamt

European
Patent Office

Office européen
des brevets

# EUROPEAN SEARCH REPORT

**Application Number**

EP 25 15 0415

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/241294 A1 (PACYNSKI MICHELLE A [US] ET AL) 5 August 2021 (2021-08-05) * abstract; claims 1-19; figures 1-13 * * paragraphs [0008] - [0012], [0023], [0028] - [0076] * ----- | 1-10 | INV. G06Q30/0601 G06Q50/00 ADD. G06Q10/101 |
| X | US 2013/191244 A1 (PAPPAS CHRISTIAN S [US] ET AL) 25 July 2013 (2013-07-25) * abstract; claims 1-20; figures 1-14 * * paragraphs [0015], [0016], [0031] - [0268] * ----- | 1-10 | |

TECHNICAL FIELDS
SEARCHED        (IPC)

G06Q

The present search report has been drawn up for all claims

| Place of search | Date of completion of the search | Examiner |
|---|---|---|
| The Hague | 30 January 2025 | Streit, Stefan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.........................................................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 25 15 0415

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2025

| Patent document cited in search report | Publication date | Patent family member(s) | Publication date |
|---|---|---|---|
| US 2021241294 A1 | 05-08-2021 | NONE | |
| US 2013191244 A1 | 25-07-2013 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021241294 A1